# EUROPEAN PATENT APPLICATION

(11) **EP 4 120 761 A1**
(43) Date of publication of application: **18.01.2023**
(21) Application number: 20925099.2
(22) Date of filing: 14.12.2020
(51) Int. Cl.: H04W 72/04

(54) **SPECTRUM RESOURCE SCHEDULING METHOD AND APPARATUS, AND COMPUTER DEVICE AND COMPUTER-READABLE MEDIUM**

(30) Priority: 20.03.2020 CN 202010203301
(71) Applicant: ZTE Corporation, Shenzhen, Guangdong 518057 (CN)
(72) Inventor: JI, Shuping, Shenzhen, Guangdong 518057 (CN); CHEN, Qiang, Shenzhen, Guangdong 518057 (CN); ZHOU, Jiangtao, Shenzhen, Guangdong 518057 (CN)
(74) Representative: Canzler & Bergmeier Patentanwälte Partnerschaft mbB
(86) International application number: PCT/CN2020/136245
(87) International publication number: WO 2021/184849

(57) **Abstract**

A spectrum resource scheduling method and apparatus, and a computer device and a computer-readable medium, which are used for scheduling spectrum resources of at least two coexisting network systems, wherein the two network systems comprise a first network system and a second network system. The method comprises: determining a channel quality parameter of a shared frequency band of a first network system (S11); and if the channel quality parameter meets a preset first condition, scheduling a spectrum resource in the shared frequency band of the first network system, or scheduling a spectrum resource in the shared frequency band of the first network system and an original frequency band of a second network system (S12).

## Description

The present application is based on and claims priority to Chinese patent application No. 202010203301.X, filed on March 20, 2020, the entire disclosure of which is incorporated herein by reference.

### TECHNICAL FIELD

The present disclosure relates to the field of wireless communication technology, and specifically relates to a spectrum resource scheduling method and apparatus, a computer device and a computer-readable medium.

### BACKGROUND

The spectrum resource is one of the most important assets of operators, and the continuous improvement of spectrum utilization rate is a consistent concern of the operators. Due to historical reasons, an operator often operates a network of multiple systems simultaneously, and after 5G (the 5th Generation Mobile Communication Technology) deployment, there may be a scenario where 2G, 3G, 4G (the 4th Generation Mobile Communication Technology), and 5G operate at the same time. With the increasing traffic demand of mobile broadband network services, the operators have to re-arrange the network from 2G/3G to 4G, and from 4G to 5G, which has been an irresistible trend. In the traditional multi-system network of the operator, each system fixedly occupies certain spectrum resources, and since each system occupies the spectrum in an exclusive manner, the spectra between different systems cannot be shared and used in a staggered peak mode, leading to serious waste of spectrum resources. The spectrum sharing technology, which can schedule spectrum resources dynamically on demand in a same band, has become an inevitable choice for operators.

Taking 4G/5G dynamic spectrum sharing as an example, 4G is a broadband system in which channel configuration is relatively extensive, and control channels, pilot frequency and the like all adopt full-band mapping, while 5G is also a broadband system where various physical channels are present. Therefore, in order to solve the interference of various physical channels between the two systems perfectly, and improve an overall spectrum utilization rate of a service channel on the shared spectrum, support of an algorithm with overall reasonable planning is desired.

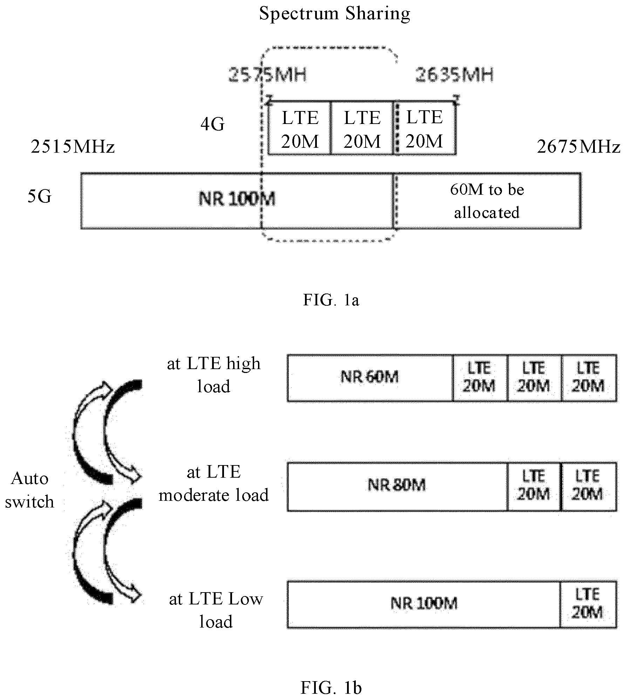

As shown in FIG. 1a, currently, an operator has deployed 3 ×20MHz Time Division Duplex Long Term Evolution (TDD-LTE) on a 2.6GHz band. If 5G New Radio (5G NR) with 100MHz bandwidth is opened, spectrum conflicts with the existing 4G TDD-LTE network will occur, so the existing 4G network is desired to release 2×20MHz bandwidth (2575 - 2615MHz). In other words, two frequency points are desired to be cleared; otherwise, merely 5G with 60M bandwidth can be opened at the present stage, and the peak rate cannot compete with that of other operators. If two frequency points are opened in a large area to replace the frequency points to be cleared, some terminals may not support opening of the frequency points, and radio resource control (RRC) reestablishment due to failed reconfiguration may occur. Within a certain period of time, NR100M may coexist with the frequency points to be cleared. In order to make full use of the spectrum resources and reduce mutual interference between NR100M and LTE frequency points, a 4G/5G spectrum sharing scheme is generated.

As shown in FIG. 1b, the conventional dynamic spectrum sharing scheme is based on a physical resource block (PRB) utilization rate of the 4G LTE system, and shares a fraction of band of the 4G LTE system to the 5G system. However, when scheduling of a 5G user occupies the shared spectrum, the modulation and coding scheme (MCS) scheduled by the user cannot be increased. As a result, the peak rate cannot be effectively guaranteed, and the user perception is not significantly improved.

### SUMMARY

In view of above, an embodiment of the present disclosure provides a spectrum resource scheduling method and apparatus, a computer device and a computer-readable medium.

In a first aspect, an embodiment of the present disclosure provides a spectrum resource scheduling method for scheduling spectrum resources of at least two coexisting network systems including a first network system and a second network system. The method includes: determining a channel quality parameter of a shared band of the first network system; and in response to the channel quality parameter meeting a preset first condition, scheduling spectrum resources in the shared band of the first network system, or, scheduling spectrum resources in the shared band of the first network system and an original band of the second network system.

In another aspect, an embodiment of the present disclosure further provides a spectrum resource scheduling apparatus, including a first determining module and a scheduling module. The first determining module is configured to determine a channel quality parameter of a shared band of a first network system; and the scheduling module is configured to, when the channel quality parameter meets a preset first condition, schedule spectrum resources in the shared band of the first network system, or, schedule spectrum resources in the shared band of the first network system and an original band of a second network system.

In another aspect, an embodiment of the present disclosure further provides a computer device, including: one or more processors and a storage. The storage stores one or more programs thereon which, when executed by the one or more processors, cause the one or more processors to perform the spectrum resource scheduling method described in any of the embodiments.

In another aspect, an embodiment of the present disclosure further provides a computer-readable medium storing a computer program thereon, where the computer program, when executed by a processor, causes the processor to perform the spectrum resource scheduling method described in any of the embodiments.

### BRIEF DESCRIPTION OF DRAWINGS

FIG. 1a is a schematic diagram of existing spectrum resource sharing of an operator;
FIG. 1b is a schematic diagram of existing dynamic spectrum sharing;
FIG. 2 is a schematic flowchart of a spectrum resource scheduling method according to an embodiment of the present disclosure;
FIG. 3 is another schematic flowchart of a spectrum resource scheduling method according to an embodiment of the present disclosure;
FIG. 4 is a flowchart of an exemplary implementation of a spectrum resource scheduling method according to an embodiment of the present disclosure;
FIG. 5 is a schematic structural diagram of a spectrum resource scheduling apparatus according to an embodiment of the present disclosure;
FIG. 6 is another schematic structural diagram of a spectrum resource scheduling apparatus according to an embodiment of the present disclosure;
FIG. 7 is still another schematic structural diagram of a spectrum resource scheduling apparatus according to an embodiment of the present disclosure; and
FIG. 8 is a schematic diagram of a computer device according to an embodiment of the present disclosure.

### DETAIL DESCRIPTION OF EMBODIMENTS

Example embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

As used herein, the term "and/or" includes any and all combinations of one or more of the associated listed items.

The terminology used herein is for the purpose of describing specific embodiments merely and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Embodiments described herein may be described with reference to plan and/or cross-sectional views in idealized representations of the present disclosure. Accordingly, the example illustrations may be modified in accordance with manufacturing techniques and/or tolerances. Accordingly, the embodiments are not limited to the embodiments shown in the drawings, but include modifications of configurations formed based on a manufacturing process. Thus, the regions illustrated in the figures have schematic properties, and the shapes of the regions shown in the figures illustrate specific shapes of regions of elements, but are not intended to be limiting.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the related art and the present disclosure, and will not be interpreted in an idealized or overly formal sense unless expressly so defined herein.

It has been found that currently, the conventional dynamic spectrum sharing scheme can merely realize the function of spectrum sharing, namely, simply add the 4G shared band into the bandwidth of the existing 5G band. However, after the spectrum sharing mode is enabled, the interference of the surrounding 4G cells is not considered in the scheduling algorithm of the 5G cells, thereby influencing perception of a 5G user. Therefore, an embodiment of the present disclosure provides a spectrum resource scheduling method in a spectrum sharing mode, which performs individual evaluation on a shared band, thereby integrally improving the user perception.

An embodiment of the present disclosure provides a spectrum resource scheduling method, which is used for scheduling spectrum resources of at least two coexisting network systems including a first network system and a second network system. In this embodiment of the present disclosure, after the shared spectrum takes effect, the shared band of the first network system, used as a band width part (BWP) separately configured for the second network system, is denoted as BWPₛₕₐᵣₑ. The BWP originally configured (i.e., the original band) for the second network system is denoted as BWP_{old}. In this manner, when the spectrum is shared, the bandwidth of the second network system becomes (BWPₛₕₐᵣₑ+BWP_{old}).

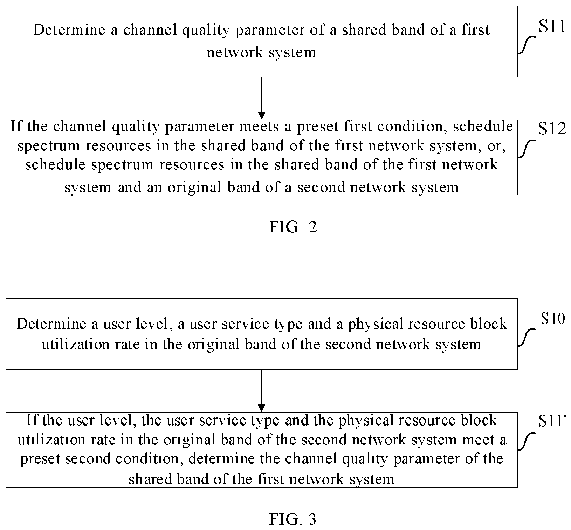

As shown in FIG. 2, the spectrum resource scheduling method according to the embodiment of the present disclosure includes the following operations S11 to S12.

At operation S11, determining a channel quality parameter of a shared band of a first network system.

In this operation, the channel quality parameter of the shared band of the first network system is determined in a preset evaluation period Tₛₕₐᵣₑ.

At operation S12, if the channel quality parameter meets a preset first condition, scheduling spectrum resources in the shared band of the first network system, or, scheduling spectrum resources in the shared band of the first network system and an original band of a second network system.

The operation of evaluating whether the channel quality of the shared band meets the first condition will be explained in detail later.

The spectrum resource scheduling method according to the embodiment of the present disclosure is used for scheduling spectrum resources of at least two coexisting network systems including a first network system and a second network system. The method includes: determining a channel quality parameter of a shared band of the first network system, and if the channel quality parameter meets a preset first condition, scheduling spectrum resources in the shared band of the first network system, or, scheduling spectrum resources in the shared band of the first network system and an original band of the second network system. In this manner, by evaluating the channel quality of the shared band, interference of the shared band to the user is sufficiently considered, and the spectrum resources of the shared channel can be called merely when the channel quality of the shared band meets certain conditions. Therefore, scheduling and use of the shared band is optimized, and the user perception is improved.

In an embodiment of the present disclosure, the channel quality parameter is a parameter that reflects a quality of the channel, and in some embodiments, the channel quality parameter includes, but is not limited to, spectral efficiency, and/or an average channel quality indicator in the evaluation period (i.e., Tₛₕₐᵣₑ). It should be noted that the spectral efficiency refers to the spectral efficiency within Tₛₕₐᵣₑ.

When the channel quality parameter is spectral efficiency, the channel quality parameter meeting the preset first condition includes a case where: the spectral efficiency is greater than a preset first threshold. When the channel quality parameter includes the average channel quality indicator in the preset evaluation period, the channel quality parameter meeting the preset first condition includes a case where: the average channel quality indicator in the preset evaluation period is greater than a preset second threshold value. When the channel quality parameter includes the spectral efficiency and the average channel quality indicator in the preset evaluation period, the channel quality parameter meeting the preset first condition includes a case where: the spectral efficiency is greater than a preset first threshold, and the average channel quality indicator in the preset evaluation period is greater than a preset second threshold value.

In some embodiments, if the channel quality parameter meets a preset first condition, the operation of scheduling spectrum resources, i.e., scheduling spectrum resources in the shared band of the first network system, or, scheduling spectrum resources in the shared band of the first network system and the original band of the second network system, includes: preferentially scheduling spectrum resources in the shared band of the first network system.

In some embodiments, preferentially scheduling spectrum resources in the shared band of the first network system includes: if the spectrum resources in the shared band of the first network system meet requirements of a user, scheduling spectrum resources in the shared band of the first network system; and if the spectrum resources in the shared band of the first network system fail to meet requirements of the user, scheduling spectrum resources in original band of the second network system after scheduling spectrum resources in the shared band of the first network system. In other words, spectrum resources in the shared band of the first network system are firstly scheduled, and then, if the spectrum resources in that shared band are insufficient, spectrum resources in the original band of the second network system are called.

In the embodiment of the present disclosure, after the channel quality of the shared band of the first network system passes the evaluation (i.e., the channel quality of the shared band is relatively good), it is further determined whether the spectrum resources in the shared band can meet the user requirements, and the spectrum resources in that shared band are preferentially used, which may help to save the spectrum resources in the original band of the second network system.

In some embodiments, the channel quality parameter of the shared band of the first network system is determined according to a preset scheduling period (Tₘₐₓ). In other words, the spectrum resources in the shared channel are scheduled according to the scheduling period, so that scheduling of the spectrum resources can be flexibly adjusted, and the real-time performance is improved.

In some embodiments, the spectrum resource scheduling method according to the embodiment of the present disclosure may further include: if the channel quality parameter does not meet the first condition, scheduling spectrum resources in the original band of the second network system. In other words, when the channel quality of the shared band of the first network system is relatively poor, the spectrum resources in the original band of the second network system, rather than the spectrum resources in that shared band, are scheduled so that stability of the user service is ensured, and the user perception is improved.

In some embodiments, in order to further reasonably schedule spectrum resources, as shown in FIG. 3, before evaluating channel quality of the shared band of the first network system, that is, before determining the channel quality parameter of the shared band of the first network system (operation S11), the spectrum resource scheduling method according to the embodiment of the present disclosure may further include the following operation S10.

At operation S10, determining a user level, a user service type and a physical resource block utilization rate in the original band of the second network system.

In this operation, a user level, a user service type and a physical resource block utilization rate in the original band of the second network system are determined after a user terminal accesses the network.

In an embodiment of the present disclosure, the user level refers to a level of importance of a user, such as a VIP user, and can be obtained from an operator device. Generally, the higher the communication fees, the higher the user level.

The user service type may be determined by obtaining a quality of service (QoS) parameter, and specifically, may be determined from indexes such as latency, latency variations (including jitter and drift), and a packet loss rate in the QoS. In an embodiment of the present disclosure, a preset type of user service refers to a user service with low latency and high reliability, such as a voice call service or the like.

Accordingly, the operation of determining the channel quality parameter of the shared band of the first network system (operation S11) includes the following operation S11'.

At operation S11', if the user level, the user service type and the physical resource block utilization rate in the original band of the second network system meet a preset second condition, determining the channel quality parameter of the shared band of the first network system.

In this operation, if the user level, the user service type and the physical resource block utilization rate in the original band of the second network system meet a preset second condition, it indicates that it is preliminarily determined that the spectrum resources in the shared band of the first network system can be scheduled. As for whether the spectrum resources in the shared band of the first network system can be actually scheduled finally, it depends on further evaluation of the channel quality of the shared band (i.e., operation S11 is performed).

In an embodiment of the present disclosure, the user level, the user service type and the physical resource block utilization rate in the original band of the second network system are comprehensively considered in calling of the spectrum resources so that calling of the spectrum resources is more reasonable, stability of the user service is improved, and the user experience and perception are guaranteed.

In some embodiments, the user level, the user service type and the physical resource block utilization rate in the original band of the second network system meeting the preset second condition includes a case where: the user level is lower than a preset level, the physical resource block utilization rate in the original band of the second network system is greater than a preset fourth threshold, and the user service type is a non-preset type. The fourth threshold is a load threshold of an original band bandwidth in the sharing mode. In other words, for the case where a user with a lower user level uses a non-preset type of user service, and the current physical resource block utilization rate in the original band of the second network system is relatively high, the spectrum resources in the shared band of the first network system can be scheduled for the user since the requirements of the user and the service on spectrum resources are not too high.

In some embodiments, the spectrum resource scheduling method according to the embodiment of the present disclosure further includes: if the user level, the user service type and the physical resource block utilization rate in the original band of the second network system fail to meet the preset second condition, scheduling spectrum resources in the original band of the second network system. In this operation, if the user level, the user service type and the physical resource block utilization rate in the original band of the second network system fail to meet the preset second condition, it is determined that the spectrum resources in the shared band of the first network system cannot be scheduled; otherwise, the user service reliability and the user experience will be affected. Therefore, in this case, spectrum resources in the original band of the second network system are scheduled to guarantee the service reliability and the user experience.

In some embodiments, the user level, the user service type and the physical resource block utilization rate in the original band of the second network system failing to meet the preset second condition includes any one of the following cases (1) to (3):
(1) the user level is higher than or equal to a preset level;
(2) the user level is lower than a preset level, and the physical resource block utilization rate in the original band of the second network system is less than or equal to a preset fourth threshold; or
(3) the user level is lower than a preset level, and the physical resource block utilization rate in the original band of the second network system is greater than a preset fourth threshold, and the user service type is a preset type.

In other words, for a higher-level user, spectrum resources in the original band of the second network system are scheduled to guarantee the service reliability and the user experience. In the case where the current physical resource block utilization rate in the original band of the second network system is relatively low, the spectrum resources in the original band of the second network system can also be scheduled for a lower-level user. In the case where the current physical resource block utilization rate in the original band of the second network system is relatively high, although the user level is lower, spectrum resources in the original band of the second network system are also scheduled for the user to guarantee the service reliability since the user currently uses a low latency and high reliability service.

In some embodiments, after a first scheduling is completed, it may be further determined whether to further schedule spectrum resources to ensure that the user service is completed. In other words, after scheduling spectrum resources in the original band of the second network system, or, after scheduling spectrum resources in the shared band of the first network system, or, after scheduling spectrum resources in the shared band of the first network system and the original band of the second network system, the spectrum resource scheduling method further includes: judging whether to further schedule spectrum resources, if to further schedule spectrum resources, determining, for a user with a user level lower than a preset level, a current physical resource block utilization rate in the original band of the second network system, so as to schedule spectrum resources according to a judgment result of whether the user level, the user service type and the current physical resource block utilization rate in the original band of the second network system meet the preset second condition (i.e., perform operation S11'), or, for a user with a user level higher than or equal to a preset level, scheduling spectrum resources in the original band of the second network system. It should be noted that the user level and the user service type remain unchanged in a short term, while the current physical resource block utilization rate in the original band of the second network system changes in real time, so when it is determined to further schedule spectrum resources, the current physical resource block utilization rate in the original band of the second network system may be simply determined again for a user with a user level lower than a preset level.

For the purpose of clearly illustrating the solutions in the embodiments of the present disclosure, exemplary implementations of the above method of the present disclosure will be described in detail below with reference to specific embodiments.

In an embodiment of the present disclosure, the case of scheduling spectrum resources of two network systems is taken as an example, where a first network system is 4G, and a second network system is 5G. A 5G cell obtains a shared band of a 4G LTE cell. A BWP is set on the shared band and denoted as BWPₛₕₐᵣₑ. One or more BWPs are set on an original band of the 5G cell, and denoted as BWP_{old}. The channel quality parameter of the shared band is spectral efficiency Eₛₕₐᵣₑ.

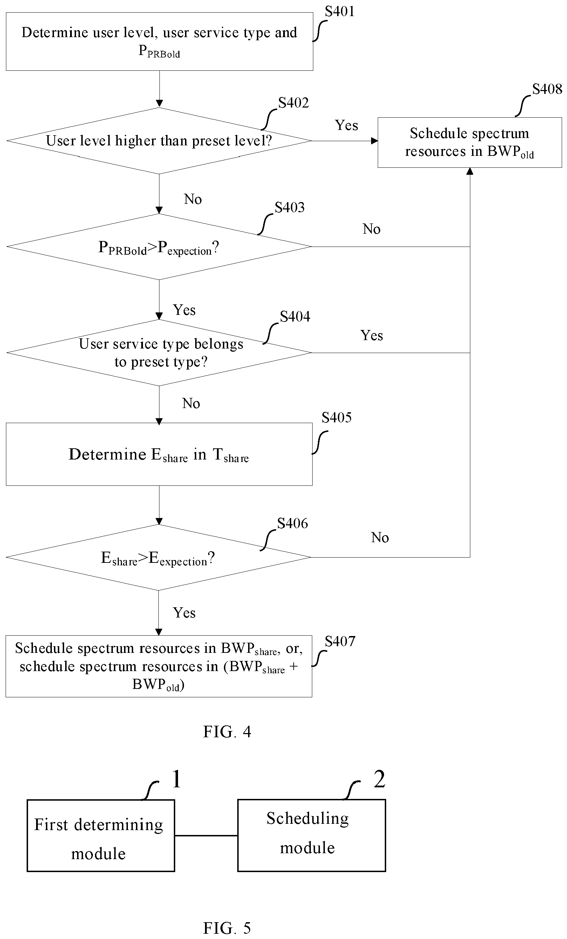

As shown in FIG. 4, the spectrum resource scheduling method according to the embodiment of the present disclosure includes the following operations S401 to S408.

At operation S401, determining a user level, a user service type and a PRB utilization rate P_{PRBold} in the original band of the 5G cell.

At operation S402, judging whether the user level is higher than a preset level, if the user level is higher than the preset level, performing operation S408; and if the user level is not higher than the preset level, performing operation S403.

In this operation, if it is determined that the user is a higher-level user (e.g., a VIP user), spectrum resources are directly scheduled in BWP_{old} (i.e., operation S408 is performed); and if it is determined that the user is a lower-level user, further judgement is made by considering the P_{PRBold} and the user service type (i.e., operation S403 is performed).

At operation S403, judging whether P_{PRBold} is greater than P_{expection} (i.e., a fourth threshold), if P_{PRBold} is greater than P_{expection}, performing operation S404; and if P_{PRBold} is not greater than P_{expection}, performing operation S408.

In this operation, if it is determined that P_{PRBold} > P_{expection}, the user service type is to be further determined (i.e., operation S404 is performed); and if it is determined that P_{PRBold} ≤ P_{expection}, spectrum resources are scheduled in BWP_{old} (i.e., operation S408 is performed).

At operation S404, judging whether the user service type belongs to a preset type, if the user service type belongs to the preset type, performing operation S405; and if the user service type does not belong to the preset type, performing operation S408.

In this operation, if it is determined that the user service type does not belong to a service type of low latency and high reliability, the channel quality of the shared channel is further evaluated (i.e., operation S405 is performed); and if it is determined that the user service type belongs to a service type of low latency and high reliability (i.e., the preset type), spectrum resources are scheduled in BWP_{old} (i.e., operation S408 is performed).

At operation S405, determining spectral efficiency Eₛₕₐᵣₑ in a shared period within an evaluation period Tₛₕₐᵣₑ.

At operation S406, judging whether Eₛₕₐᵣₑ is greater than a first threshold E_{expection}, if Eₛₕₐᵣₑ is greater than the first threshold E_{expection}, performing operation S407; and if Eₛₕₐᵣₑ is not greater than the first threshold E_{expection}, performing operation S408.

In this operation, if it is determined that Eₛₕₐᵣₑ > E_{expection}, it indicates that the first condition is met, and spectrum resources may be scheduled in BWPₛₕₐᵣₑ (i.e., operation S407 is performed); and if it is determined that Eₛₕₐᵣₑ ≤ E_{expection}, it indicates that the first condition is not met, and spectrum resources are scheduled in BWP_{old} (i.e., operation S408 is performed).

At operation S407, scheduling spectrum resources in BWPₛₕₐᵣₑ, or, scheduling spectrum resources in (BWPₛₕₐᵣₑ + BWP_{old}).

In this operation, the spectrum resources are scheduled for a time period (Tₘₐₓ-Tₛₕₐᵣₑ).

At operation S408, scheduling spectrum resources in BWP_{old}.

It should be noted that after operations S407 and S408, the method further includes: judging whether to further schedule spectrum resources, if not to further schedule spectrum resources, ending the process; and if to further schedule spectrum resources, for a lower-level user, determining P_{PRBold} and judging whether P_{PRBold} is greater than P_{expection} (i.e., performing operation S403), and for a higher-level user, directly scheduling spectrum resources in BWP_{old} (i.e., performing operation S408).

The spectrum resource scheduling method according to the embodiment of the present disclosure can overcome the problem of affected user perception in some cases because the shared band is not evaluated and the 4G shared band is simply added to the bandwidth of the 5G original band, realizing the effects of optimizing scheduling and use of the 4G shared band and improving the user perception.

Based on a same technical concept, an embodiment of the present disclosure further provides a spectrum resource scheduling apparatus which, as shown in FIG. 5, includes a first determining module 1 and a scheduling module 2. The first determining module 1 is configured to determine a channel quality parameter of a shared band of a first network system.

The scheduling module 2 is configured to, when the channel quality parameter meets a preset first condition, schedule spectrum resources in the shared band of the first network system, or, schedule spectrum resources in the shared band of the first network system and an original band of a second network system.

In some embodiments, the first determining module 1 is configured to determine the channel quality parameter of the shared band of the first network system in a preset evaluation period.

In some embodiments, the channel quality parameter includes spectral efficiency, and the channel quality parameter meeting the preset first condition includes a case where: the spectral efficiency is greater than a preset first threshold; or, the channel quality parameter includes an average channel quality indicator in the preset evaluation period, and the channel quality parameter meeting the preset first condition includes a case where: the average channel quality indicator in the preset evaluation period is greater than a preset second threshold value; or, the channel quality parameter includes spectral efficiency, and an average channel quality indicator in the preset evaluation period, and the channel quality parameter meeting the preset first condition includes a case where: the spectral efficiency is greater than a preset first threshold, and the average channel quality indicator in the preset evaluation period is greater than a preset second threshold value.

In some embodiments, the scheduling module 2 is configured to preferentially schedule spectrum resources in the shared band of the first network system.

In some embodiments, the scheduling module 2 is configured to, when the spectrum resources in the shared band of the first network system meet requirements of a user, schedule spectrum resources in the shared band of the first network system; and when the spectrum resources in the shared band of the first network system fail to meet requirements of the user, schedule spectrum resources in original band of the second network system after scheduling spectrum resources in the shared band of the first network system.

In some embodiments, the scheduling module 2 is further configured to, when the channel quality parameter does not meet the first condition, schedule spectrum resources in the original band of the second network system.

In some embodiments, the first determining module 1 is configured to determine the channel quality parameter of the shared band of the first network system according to a preset scheduling period.

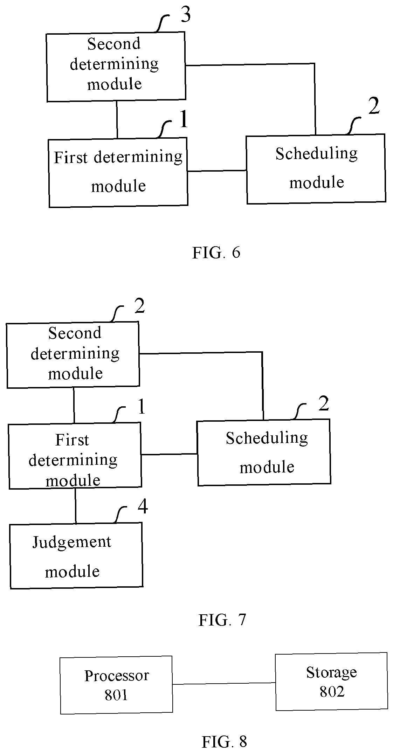

In some embodiments, as shown in FIG. 6, the spectrum resource scheduling apparatus further includes a second determining module 3 configured to determine a user level, a user service type and a physical resource block utilization rate in the original band of the second network system.

The first determining module 1 is configured to, when the user level, the user service type and the physical resource block utilization rate in the original band of the second network system meet a preset second condition, determine a channel quality parameter of a shared band of a first network system.

In some embodiments, the user level, the user service type and the physical resource block utilization rate in the original band of the second network system meeting the preset second condition includes a case where: the user level is lower than a preset level, the physical resource block utilization rate in the original band of the second network system is greater than a preset fourth threshold, and the user service type is a non-preset type.

In some embodiments, the scheduling module 2 is further configured to, when the user level, the user service type and the physical resource block utilization rate in the original band of the second network system fail to meet the preset second condition, schedule spectrum resources in the original band of the second network system.

In some embodiments, the user level, the user service type and the physical resource block utilization rate in the original band of the second network system failing to meet the preset second condition includes any one of the following cases:
the user level is higher than or equal to a preset level;
the user level is lower than a preset level, and the physical resource block utilization rate in the original band of the second network system is less than or equal to a preset fourth threshold; or
the user level is lower than a preset level, and the physical resource block utilization rate in the original band of the second network system is greater than a preset fourth threshold, and the user service type is a preset type.

In some embodiments, as shown in FIG. 7, the spectrum resource scheduling apparatus further includes a judgement module 4 configured to judge whether to further schedule spectrum resources.

The first determining module 1 is further configured to, when the judgement module 4 determines to further schedule spectrum resources, determine, for a user with a user level lower than a preset level, a current physical resource block utilization rate in the original band of the second network system, so as to schedule spectrum resources according to a judgment result of whether the user level, the user service type and the current physical resource block utilization rate in the original band of the second network system meet the preset second condition, or, for a user with a user level higher than or equal to a preset level, schedule spectrum resources in the original band of the second network system.

Referring to FIG. 8, an embodiment of the present disclosure further provides a computer device, including: one or more processors 801 and a storage 802. The storage 802 stores one or more programs thereon which, when executed by the one or more processors 801, cause the one or more processors 801 to perform the spectrum resource scheduling method described in any of the above embodiments.

An embodiment of the present disclosure further provides a computer-readable medium storing a computer program thereon, where the computer program, when executed by a processor, causes the processor to perform the spectrum resource scheduling method described in any of the above embodiments.

The spectrum resource scheduling method according to the embodiment of the present disclosure is used for scheduling spectrum resources of at least two coexisting network systems including a first network system and a second network system. The method includes: determining a channel quality parameter of a shared band of the first network system, and if the channel quality parameter meets a preset first condition, scheduling spectrum resources in the shared band of the first network system, or, scheduling spectrum resources in the shared band of the first network system and an original band of the second network system. In this manner, by evaluating the channel quality of the shared band, interference of the shared band to the user is sufficiently considered, and the spectrum resources of the shared channel can be called merely when the channel quality of the shared band meets certain conditions. Therefore, scheduling and use of the shared band is optimized, and the user perception is improved.

Those of ordinary skill in the art will appreciate that all or some operations of the above described method, functional modules/units in the apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed some embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A spectrum resource scheduling method for scheduling spectrum resources of at least two coexisting network systems comprising a first network system and a second network system, wherein the method comprises:
determining a channel quality parameter of a shared band of the first network system; and
in response to the channel quality parameter meeting a preset first condition, scheduling spectrum resources in the shared band of the first network system, or, scheduling spectrum resources in the shared band of the first network system and an original band of the second network system.

2. The method according to claim 1, wherein determining the channel quality parameter of the shared band of the first network system comprises:
determining the channel quality parameter of the shared band of the first network system in a preset evaluation period.

3. The method according to claim 2, wherein, the channel quality parameter comprises spectral efficiency, and the channel quality parameter meeting the preset first condition comprises a case where: the spectral efficiency is greater than a preset first threshold; or,
the channel quality parameter comprises an average channel quality indicator in the preset evaluation period, and the channel quality parameter meeting the preset first condition comprises a case where: the average channel quality indicator in the preset evaluation period is greater than a preset second threshold value; or,
the channel quality parameter comprises spectral efficiency, and an average channel quality indicator in the preset evaluation period, and the channel quality parameter meeting the preset first condition comprises a case where: the spectral efficiency is greater than a preset first threshold, and the average channel quality indicator in the preset evaluation period is greater than a preset second threshold value.

4. The method according to claim 1, wherein, scheduling spectrum resources in the shared band of the first network system, or, scheduling spectrum resources in the shared band of the first network system and the original band of the second network system comprises:
preferentially scheduling spectrum resources in the shared band of the first network system.

5. The method according to claim 4, wherein preferentially scheduling spectrum resources in the shared band of the first network system comprises:
in response to the spectrum resources in the shared band of the first network system meeting requirements of a user, scheduling spectrum resources in the shared band of the first network system;
in response to the spectrum resources in the shared band of the first network system failing to meet requirements of the user, scheduling spectrum resources in the original band of the second network system after scheduling spectrum resources in the shared band of the first network system.

6. The method according to claim 1, further comprising: in response to the channel quality parameter not meeting the first condition, scheduling spectrum resources in the original band of the second network system.

7. The method according to claim 1, wherein determining the channel quality parameter of the shared band of the first network system comprises:
determining the channel quality parameter of the shared band of the first network system according to a preset scheduling period.

8. The method according to any one of claims 1 to 7, wherein before determining the channel quality parameter of the shared band of the first network system, the method further comprises:
determining a user level, a user service type and a physical resource block utilization rate in the original band of the second network system; and
determining the channel quality parameter of the shared band of the first network system comprises:
in response to the user level, the user service type and the physical resource block utilization rate in the original band of the second network system meeting a preset second condition, determining the channel quality parameter of the shared band of the first network system.

9. The method according to claim 8, wherein the user level, the user service type and the physical resource block utilization rate in the original band of the second network system meeting the preset second condition comprises a case where:
the user level is lower than a preset level, the physical resource block utilization rate in the original band of the second network system is greater than a preset fourth threshold, and the user service type is a non-preset type.

10. The method according to claim 8, further comprising:
in response to the user level, the user service type and the physical resource block utilization rate in the original band of the second network system failing to meet the preset second condition, scheduling spectrum resources in the original band of the second network system.

11. The method according to claim 10, wherein the user level, the user service type and the physical resource block utilization rate in the original band of the second network system failing to meet the preset second condition comprises any one of the following cases:
the user level is higher than or equal to a preset level;
the user level is lower than a preset level, and the physical resource block utilization rate in the original band of the second network system is less than or equal to a preset fourth threshold; or
the user level is lower than a preset level, and the physical resource block utilization rate in the original band of the second network system is greater than a preset fourth threshold, and the user service type is a preset type.

12. The method according to claim 10, wherein after scheduling spectrum resources in the original band of the second network system, or, after scheduling spectrum resources in the shared band of the first network system, or, after scheduling spectrum resources in the shared band of the first network system and the original band of the second network system, the method further comprises:
judging whether to further schedule spectrum resources, if to further schedule spectrum resources, determining, for a user with a user level lower than a preset level, a current physical resource block utilization rate in the original band of the second network system, so as to schedule spectrum resources according to a judgment result of whether the user level, the user service type and the current physical resource block utilization rate in the original band of the second network system meet the preset second condition, or, for a user with a user level higher than or equal to a preset level, scheduling spectrum resources in the original band of the second network system.

13. A spectrum resource scheduling apparatus, comprising a first determining module and a scheduling module, wherein
the first determining module is configured to determine a channel quality parameter of a shared band of a first network system; and
the scheduling module is configured to, when the channel quality parameter meets a preset first condition, schedule spectrum resources in the shared band of the first network system, or, schedule spectrum resources in the shared band of the first network system and an original band of a second network system.

14. A computer device, comprising:
one or more processors;
a storage having one or more programs stored thereon, wherein
the one or more programs, when executed by the one or more processors, cause the one or more processors to implement the spectrum resource scheduling method according to any one of claims 1 to 12.

15. A computer-readable medium storing a computer program thereon, wherein the computer program, when executed by a processor, causes processor to perform the spectrum resource scheduling method according to any one of claims 1 to 12.
